(19) **Europäisches Patentamt**

**European Patent Office**

**Office européen des brevets**

(11) **EP 0 554 551 B1**

(12) **EUROPÄISCHE PATENTSCHRIFT**

(45) Veröffentlichungstag und Bekanntmachung des Hinweises auf die Patenterteilung:
**04.09.1996 Patentblatt 1996/36**

(51) Int. Cl.⁶: **B65G 39/20**, B65G 21/22, F16H 7/18

(21) Anmeldenummer: **92121366.6**

(22) Anmeldetag: **16.12.1992**

(54) **Kettenumlenkung**

Chain return

Renvoi pour chaîne

(84) Benannte Vertragsstaaten:
**CH DE ES FR GB IT LI SE**

(30) Priorität: **05.02.1992 CH 327/92**

(43) Veröffentlichungstag der Anmeldung:
**11.08.1993 Patentblatt 1993/32**

(73) Patentinhaber: **Ferag AG**
**CH-8340 Hinwil (CH)**

(72) Erfinder: **Eberle, Jürg**
**CH-8340 Hinwil (CH)**

(74) Vertreter: **Frei, Alexandra Sarah**
**Frei Patentanwaltsbüro**
**Hedwigsteig 6**
**Postfach 768**
**8029 Zürich (CH)**

(56) Entgegenhaltungen:
**BE-A- 662 898**        **DE-C- 688 182**
**US-A- 4 498 890**

## Beschreibung

Die Erfindung liegt auf dem Gebiete von Ketten, insbesondere von Transportketten, und betrifft eine Kettenumlenkung gemäss dem Oberbegriff des Patentanspruchs 1, der unter Berücksichtigung des Standes der Technik nach der BE-A 662898 formuliert wurde

Bei der Kettenumlenkung gemäß der BE-A-662898 werden zur Herabsetzung der Polygonalwirkung im Bereich einer Kettenumlenkung um ein Rad Kettenführungen vorgeschlagen, mit deren Hilfe die Kette während ihrer Umlenkung auf einer Bahn geführt wird, die einen sich periodisch ändernden Abstand vom Umlenkungsmittelpunkt hat oder die sich aus Kreisbogen mit verschiedenen Radien und Mittelpunkten zusammensetzt. Dadurch wird zwar die Polygonalwirkung vermindert aber die Anwendungsfreiheit eingeschränkt, da der Umlenkungsbogen und die Gliedlänge der Kette fest miteinander verknüpft sind.

Ketten als Transport- oder Antriebsmittel, die sich auf einer geschlossenen Bahn bewegen, müssen umgelenkt werden. Dies geschieht mittels Umlenkungsmitteln, beispielsweise Kettenrädern und/oder Kettenführungen, wobei die Umlenkung ein meist in einer Ebene verlaufendes, kreisbogenförmiges Teilstück der Kettenbahn (Umlenkungsbogen) darstellt, dessen Radius (Umlenkungsradius) und Öffnungswinkel (Umlenkungswinkel) die Umlenkung bestimmen und an das meist im wesentlichen gradlinige Kettenbahnteile anschliessen. Die Kette bewegt sich um eine derartige Umlenkung in der Form eines sich drehenden Polygons, wodurch ungleichförmige Bewegungen entstehen. Das heisst mit anderen Worten, dass beispielsweise durch eine Umlenkungsstelle mit Kettenantriebsrad bei konstanter Winkelgeschwindigkeit des Antriebsrades keine exakt konstante Kettengeschwindigkeit erzeugt werden kann und dass umgekehrt bei einem Umlenkungsabtriebsrad von einer mit konstanter Geschwindigkeit sich bewegenden Kette keine exakt konstante Winkelgeschwindigkeit abgenommen werden kann. Die Ungleichmässigkeit der Bewegungen ist dabei von der Anzahl Zähne des Kettenrades abhängig, derart, dass je kleiner die Zähnezahl, desto grösser die Ungleichmässigkeit. Ebenso bedeutet es, dass insbesondere bei komplexen Systemen mit verschiedensten Umlenkungen, unerwünschte Kräfte auf Ketten und/oder Umlenkungselemente und unerwünschte Schwingungen und Vibrationen auftreten, die zu erhöhtem Verschleiss an den Systemen führen.

Diese sogenannte Polygonalwirkung bei einer Kettenumlenkung wird gemäss Lehrbuch (Dubbels Taschenbuch für Maschinenbau Zwölfte Auflage, Band 1, Seite 750) auf ein tolerierbares Mass beschränkt durch Kettenräder mit minimal 17 Zähnen, was bei bestimmter Kettengliedlänge den Umlenkungsradius bestimmt, oder sie wird vermieden durch (für den Fall eines Kettentriebes mit zwei Kettenrädern) gleiche, gerade Zahnzahlen an beiden Kettenrädern. Beide diese Massnahmen schränken Anordnungen mit Ketten in ihrer räumlichen Ausgestaltung stark ein. Insbesondere auf dem Gebiete der Transportketten, deren Kettenglieder zur Verkleinerung der durch die transportierten Gegenstände auf die Kettenglieder wirkenden Kräfte in Transportrichtung eine möglichst grosse Ausdehnung haben sollten, bedeutet die Bedingung von minimal 17 Zähnen eine äusserst unbequeme Einschränkung. Sie begrenzt beispielsweise bei einer Kettengliedlänge von 100mm, wie sie bei Transportketten für Systeme zum Transport von Druckprodukten durchaus üblich ist, den Umlenkungsradius gegen unten auf ca. 270mm.

Es zeigt sich, dass die Polygonalwirkung bei geführten Kettenumlenkungen, wie sie beispielsweise in der DE-Patentschrift Nr. 2730998 und der CH-Patentschrift Nr. 623283 derselben Anmelderin beschrieben sind, kleiner ist als für ungeführte Ketten, die an Kettenrädern umgelenkt werden, aber auch für derartige Anordnungen ist die auftretende Polygonalwirkung bei erwünschten, kleinen Umlenkungsradien noch zu gross.

Es ist deshalb die Aufgabe der Erfindung eine Kettenumlenkung aufzuzeigen, für die gegenüber dem Stande der Technik für eine bestimmte Kettengliedlänge die durch die Polygonalwirkung gesetzte untere Grenze für den Umlenkungsradius nach unten verschoben wird. Das heisst mit anderen Worten, es ist die Aufgabe der Erfindung, eine Kettenumlenkung zu schaffen, für die die Polygonalwirkung kleiner ist, sodass eine Kette mit einer bestimmten Kettengliedlänge bei gleicher Polygonalwirkung um einen bedeutend kleineren Umlenkungsradius umgelenkt werden kann als mit den Kettenumlenkungen gemäss dem Stande der Technik.

Diese Aufgabe wird gelöst durch die Kettenumlenkung gemäss dem unabhängigen Patentanspruch.

Die zentrale Idee der erfindungsgemässen Kettenumlenkung besteht darin, dass zur Verminderung der Polygonalwirkung die Bahn der Kette auf der einen oder auf beiden Seiten des kreisbogenförmigen Umlenkungsbogens nicht wie gemäss dem Stand der Technik im wesentlichen gradlinig und tangential an den Umlenkungsbogen der Umlenkung anschliesst, sondern in Form einer Übergangskurve, die im wesentlichen in derselben Ebene gekrümmt ist, in der auch der Umlenkungsbogen liegt. An der Anschlussstelle zwischen den beiden Bahnteilen, Umlenkungsbogen und Übergangskurve, sollen diese eine im wesentlichen gemeinsame Tangente haben. Dabei soll die Krümmung der an den Umlenkungsbogen anschliessenden Übergangskurve nicht konstant sein, sondern derart, dass der Unterschied zwischen ihrem Krümmungsradius und dem Umlenkungsradius (Kreisradius des Umlenkungsbogens) sich gegen die Anschlusstelle zum Umlenkungsbogen hin stetig verkleinert. Die Krümmungsrichtung ist dabei vorteilhafterweise für Umlenkungsbogen und Übergangskurve dieselbe.

An die Übergangskurve können dann beispielsweise gradlinige Bahnteile oder weitere Umlenkungen anschliessen. Diese geradlinigen Kettenbahnteile müssen nicht wie für Umlenkungen gemäss dem Stande der Technik tangential auf den Umlenkungsbogen gerichtet sein, was einen weiteren Vorteil der erfindungsgemässen Umlenkung darstellt.

Die Kettenbahn der erfindungsgemässen Kettenumlenkung wird definiert durch Führungsmittel. Diese sind einerseits ein Umlenkungsmittel, das die Kette um den Umlenkungsbogen führt, beispielsweise ein Kettenrad und/oder ein kreisbogenförmiger Kettenkanal, und andererseits beispielsweise mechanische Kettenführungen entlang der Übergangskurve, die je nach Art der auf die Kette wirkenden Kräfte (Zug-oder Stosskräfte und weitere Belastungskräfte durch beispielsweise transportierte Gegenstände) als Führungsschienen oder als mehr oder weniger geschlossene Führungskanäle ausgebildet sind und sich auch entlang anschliessenden, geradlinigen Kettenbahnteilen fortsetzen können.

Anhand der folgenden Figuren soll die Polygonalwirkung und deren Verminderung durch die erfindungsgemässe Kettenumlenkung erklärt und beispielhafte Ausführungsformen der erfindungsgemässen Kettenumlenkung teils schematisch, teils im Detail gezeigt werden. Dabei zeigen:

| | |
|---|---|
| **Figur 1** | ein Prinzipschema der erfindungsgemässen Kettenumlenkung; |
| **Figur 2** | die Auswirkung der Polygonalwirkung an drei Kettenumlenkungen und zwar an einer beispielhaften Ausführungsform der erfindungsgemässen Umlenkung und an einer geführten und einer ungeführten Umlenkung gemäss dem Stande der Technik; |
| **Figuren 3 und 4** | weitere schematisch dargestellte, beispielhafte Ausführungsformen der Erfindungsgemässen Umlenkung, |
| **Figur 5** | eine beispielhafte Ausführungsform der erfindungsgemässen Kettenumlenkung für eine auf Rollen laufende Transportkette, senkrecht zur Kettenradachse geschnitten. |
| **Figur 6** | die Umlenkung gemäss Figur 5, parallel zur Kettenradachse geschnitten. |

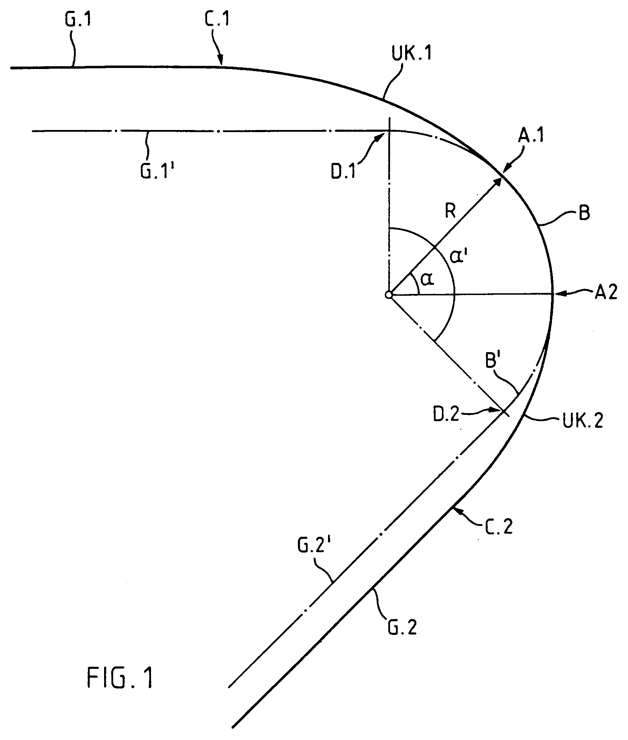

**Figur 1** zeigt an einer schematisch dargestellten, beispielhaften Ausführungsform das Prinzip der erfindungsgemässen Kettenumlenkung. Es handelt sich dabei im wesentlichen um zwei gradlinige Kettenbahnteile G.1 und G.2 mit verschiedenen Richtungen und dazwischen einer Umlenkung entlang einem Umlenkungsbogen B mit dem Radius R und dem Öffnungswinkel $\alpha$. Der Kreis mit dem Radius R stellt dabei den Teilkreis eines Kettenrades oder eine entsprechende Linie in einem Umlenkungskanal dar. Gemäss Erfindung schliesst nun an die Umlenkung um den Bogen B beispielsweise wie dargestellt beidseitig an den Anschlussstellen A.1 bzw. A.2 eine Übergangskurve UK.1 bzw. UK.2 an, an die sich dann an den Anschlussstellen C.1 bzw. C.2 die geradlinigen Bahnteile G.1 bzw. G.2 anschliessen.

In der Figur ist strichpunktiert auch eine im wesentlichen entsprechende Kettenumlenkung gemäss dem Stande der Technik dargestellt. Dabei schliessen an den Umlenkungsbogen B' an den Anschlussstellen D.1 bzw. D.2 ohne Übergangskurve die geradlinigen Bahnteile G.1' bzw. G.2' an. Der Öffnungswinkel $\alpha'$ des Umlenkungsbogens B' ist dabei für eine gleiche Umlenkung grösser als der entsprechende Öffnungswinkel $\alpha$ des Bogens B.

Für die Übergangskurve UK und deren Krümmungsradius RUK (in der Figur nicht eingezeichnet) gelten für die in der Figur 1 dargestellte Ausführungsform (Krümmungsrichtung der Übergangskurve gleich wie Krümmungsrichtung des Umlenkungsbogens, geradliniger Bahnteil an die Übergangskurve anschliessend):

1. an der Anschlussstelle A.1 bzw. A.2 ist RUK(A) $\geq$ R und besitzen Umlenkungsbogen und Übergangskurve eine gemeinsame Tangente,
2. an jeder anderen Stelle der Übergangskurve ist RUK > RUK(A),
3. an der Anschlussstelle C.1 bzw. C.2 kann RUK(C) = $\infty$ sein und
4. die Länge des Krümmungsradius verändert sich zwischen den Anschlussstellen A.1 und C.1 bzw. A.2 und C.2 stetig und gleichsinnig.

Es zeigt sich, dass die Polygonalwirkung für die Umlenkung einer Kette mit einer bestimmten Kettengliedlänge um einen bestimmten Umlenkungsradius um so kleiner ist, je kleiner der Gradient des Krümmungsradius ist und je kleiner an der Anschlussstelle an den Umlenkungsbogen der Unterschied zwischen dem Krümmungsradius der Übergangskurve und dem Umlenkungsradius des Umlenkungsbogens ist. Ebenfalls zeigt es sich, dass Umlenkungen mit beidseitigen Übergangskurven eine schwächere Polygonalwirkung aufweisen als Umlenkungen mit nur einseitigen Übergangskurven.

Die Übergangskurve kann beispielsweise ein Teilstück einer Klothoide darstellen. Die Klothoide ist eine Kurve, die sich spiralförmig windet und die der allgemeinen Formel K = (LxR)$^{1/2}$ entspricht, wobei K ein für eine spezielle Klothoide konstanter Parameter, L die Kurvenlänge vom Klothoidenanfangspunkt (L = 0, R = $\infty$) und R den Krümmungsradius bedeutet und die Klothoide sich von R = $\infty$/L = 0 bis R = 0/L = $\infty$ erstreckt. Das die Übergangskurve darstellende Teistück der Klothoide liegt zwischen R = RUK(A) und RUK(C).

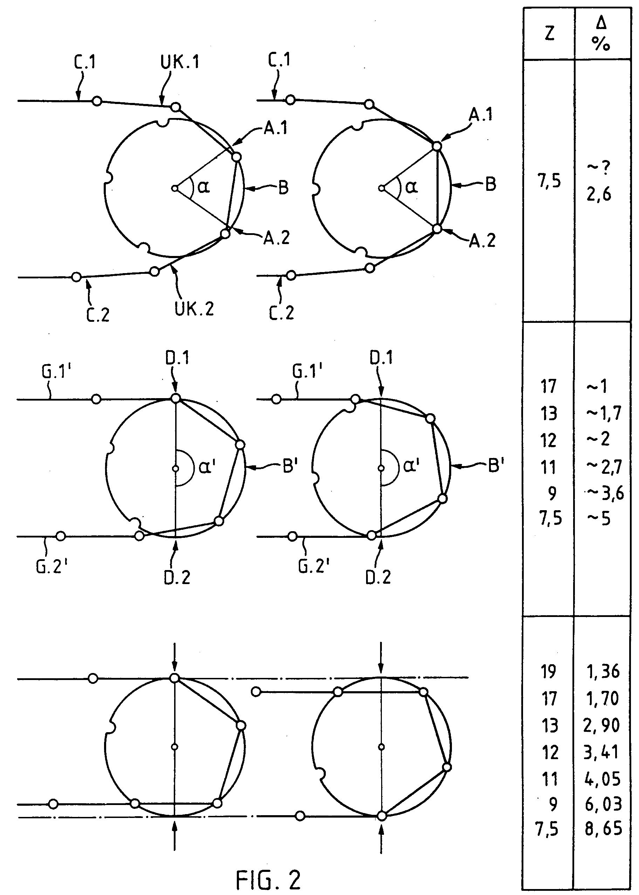

**Figur 2** zeigt drei Beispiele von Kettenumlenkungen und dient zur Erläuterung der Polygonalwirkung. Es handelt sich dabei um 180°-Kettenradumlenkungen, wobei das Kettenrad Antriebsrad, Abtriebsrad oder passives Umlenkungsrad sein kann. Das dargestellte beispielhafte Kettenrad hat fünf Zähne, derart, dass dei Umlenkungsradius im Verhältnis zur Länge der Kettenglieder sehr klein und damit die Polygonalwirkung für eine Umlenkung gemäss dem Stande der Technik gross ist.

Im obersten Teil der Figur 2 ist die erfindungsgemässe Kettenumlenkung dargestellt nebeneinander in zwei verschiedenen Phasen des Umlaufes. Die einzelnen Teile entsprechen im wesentlichen den Teilen der Figur 1 und sind deshalb auch mit denselben Bezugszeichen versehen. Damit die Kette immer mit mindestens einem Zahn des Kettenrades im Eingriff ist, muss der Öffnungswinkel $\alpha \geqq 360/z$ sein, wobei z die Anzahl der Zähne des Kettenrades ist, die bei einem Umlauf mit der Kette zum Eingriff kommen. Diese Bedingung gilt nicht für Umlenkungen in einem Kettenkanal oder anderen Führungsmitteln ohne Zähne. Entsprechende Messungen zeigen, dass die Ungleichmässigkeit $\Delta$ der Bewegung (siehe Tabelle rechts in der Figur 2), also beispielsweise der Unterschied zwischen maximaler und minimaler Kettengeschwindigkeit im Verhältnis zur Umfangsgeschwindigkeit des Kettenrades bei einem Antrieb durch das mit konstanter Winkelgeschwindigkeit drehende Kettenrad bei einer Zähnezahl von 7,5 (effektiv 15 Zähne, wobei jeder zweite Zahn mit der Kette zum Ein-Zähnezahl von 7,5 (effektiv 15 Zähne, wobei jeder zweite Zahn mit der Kette zum Eingriff kommt) etwa 2,6% ist. Um die Vorteile der erfindungsgemässen Umlenkung zu verdeutlichen, werden diesem Wert entsprechende Werte für Umlenkungen gemäss dem Stande der Technik entgegengestellt.

In der Mitte der Figur 2 ist eine Umlenkung gemäss dem Stande der Technik dargestellt. Es handelt sich um ein gleiches Kettenrad wie das oben dargestellte. Die Kette wird mit entsprechenden Führungsmitteln bis an die Anschlussstellen D.1 bzw. D.2 gradlinig und tangential an den Teilkreis des Kettenrades geführt. Die bei einer solchen Umlenkung entstehende Ungleichmässigkeit $\Delta$ berechnete Werte), die wiederum rechts in der Tabelle und zwar für verschiedene Zahnzahlen angegeben ist, ist offensichtlich bedeutend grösser als für die entsprechende erfindungsgemässe Umlenkung.

Im untersten Teil der Figur 2 ist eine Kettenumlenkung ohne Kettenführung über die gradlinigen Kettenbahnteile dargestellt. Bei einer derartigen Umlenkung ist die Lage der gradlinigen Kettenbahnteile je nach Radstellung (linke und rechte Darstellung) nicht dieselbe, sondern bewegt sich zwischen zwei extremen Lagen. Die entstehende Unregelmässigkeit wird deutlich beim Vergleich der linken und der rechten Darstellung. Während links die Geschwindigkeit der Kette der Umfangsgeschwindigkeit des Teilkreises entspricht, entspricht sie rechts nur der waagrechten Komponente davon. Der Unterschied zwischen diesen beiden extremen Kettengeschwindigkeiten (bei konstanter Drehung des Rades) sinkt mit steigender Zähnezahl. Zur Illustration sind auch für diesen Fall in der Tabelle rechts die berechneten Werte für verschiedene Zähnezahlen angegeben.

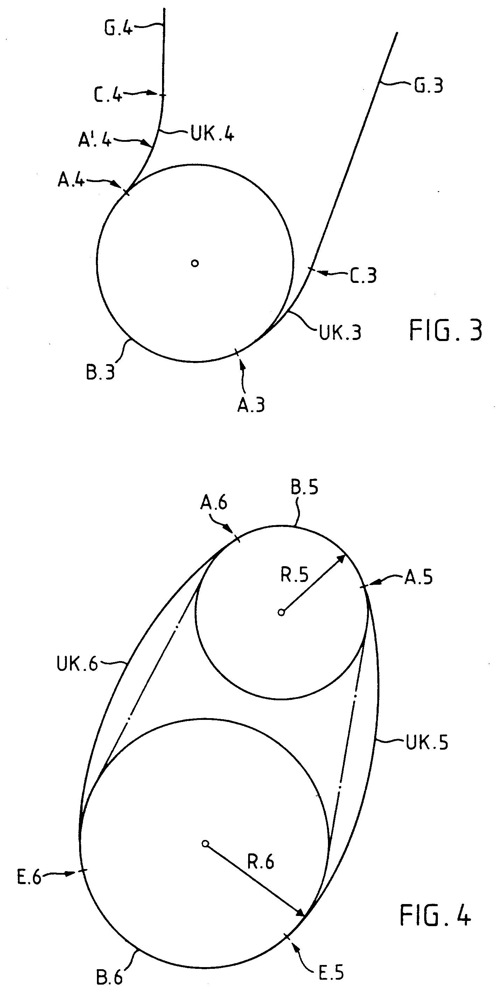

**Figur 3** zeigt in derselben schematischen Darstellungsweise wie Figur 1 eine weitere beispielhafte Ausführungsform der erfindungsgemässen Umlenkung. Es handelt sich wiederum, wie in der Figur 1 um eine Umlenkung zwischen zwei gradlinigen Kettenbahnteilen G.3 und G.4. Der Kettenbahnteil der Umlenkung besteht wiederum aus einem kreisbogenförmigen Umlenkungsbogen B.3 und daran anschliessende Übergangskurven UK.3 bzw. UK.4, an die dann die geradlinigen Bahnteile G.3 bzw. G.4 anschliessen. Dabei entspricht die Krümmungsrichtung der Übergangskurve UK.3 der Krümmungsrichtung des Umlenkungsbogens B.3, während die Krümmungsrichtung der Übergangskurve UK.4 dieser entgegengerichtet ist. Die im Zusammenhang mit der Figur 1 aufgezeigten Bedingungen für die Übergangskurve und deren Krümmungsradius gelten für die Übergangskurve UK.3. Für die Übergangskurve UK.4 lauten (Krümmungsrichtung von Umlenkungsbogen und Übergangskurve einander entgegengerichtet, gradliniger Bahnteil an Übergangskurve anschliessend) lauten sie wie folgt:

1. die Anschlussstelle zwischen Umlenkungsbogen B.3 und Übergangskurve UK.4 ist nicht punktförmig' sondern stellt einen gradlinigen, tangential an den Umlenkungsbogen B.3 anschliessenden Bahnteil A.4/A'.4 dar, der mindestens die Länge eines Kettengliedes hat.
2. an der Anschlussstelle A'.4 ist RUK(A) kleiner, grösser oder gleich R,
3. an jeder anderen Stelle ist RUK > RUK(A'),
4. an der Anschlussstelle C.4 kann RUK(C) = $\infty$ sein und
5. die Länge des Krümmungsradius verändert sich zwischen den Anschlussstellen A.4 und C.4 stetig und gleichsinnig.

Die Figur zeigt deutlich, dass für die erfindungsgemässe Umlenkung die Bedingung, dass die geradlinigen Bahnteile auf Tangenten an den Umlenkungskreis liegen müssen (Stand der Technik), wegfällt.

**Figur 4** zeigt eine weitere, beispielhafte Ausführungsform der erfindungsgemässen Kettenumlenkung, wiederum schematisch dargestellt. Es handelt sich hier um eine zweifache Umlenkung für beispielsweise einen Kettentrieb mit zwei Umlenkungsbogen B.5 bzw. B.6 mit einem kleineren Umlenkungsradius R.5 und einem grösseren Umlenkungsradius R.6. An den Umlenkungsbogen B.5 schliessen sich beidseitig wie im Zusammenhang mit der Figur 1 beschrieben an den Anschlussstellen A.5 bzw. A.6 zwei Übergangskurven UK.5 bzw. UK.6 an, die ihrerseits an Anschlussstellen E.5 bzw. E.6 beidseitig an den Umlenkungsbogen B.6 anschliessen. Für die Übergangskurven UK.5 bzw. UK.6 (beidseitig an Umlenkungsbogen anschliessend) gelten die folgenden Bedingungen:

1. an der Anschlussstelle A.5/6 an den Umlenkungsbogen B.5 mit dem kleineren Umlenkungsradius R.5 ist der Krümmungsradius RUK(A) ≧ R.5;

2. an der Anschlussstelle E.5/6 an den Umlenkungsbogen B.6 mit dem grösseren Umlenkungsradius R.6 ist der Krümmungsradius RUK(E) > R.6;

3. die Länge des Krümmungsradius nimmt zwischen den Anschlussstellen A.5/6 und E.5/6 stetig zu.

Auch in der Figur 4 ist die entsprechende Kettenbahn gemäss dein Stande der Technik strichpunktiert eingezeichnet.

Entsprechend der Figuren 3 und 4 sind unendlich viele Kombinationen von Umlenkungsbogen, Übergangskurven und gradlinigen Kettenbahnteilen vorstellbar.

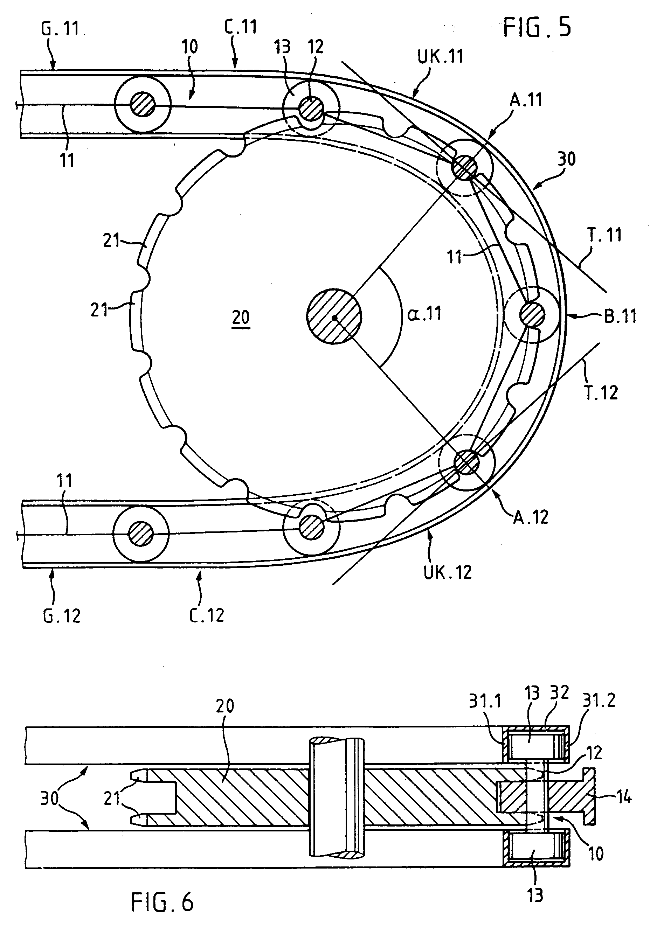

**Figuren 5 und 6** zeigen nun im Detail in Schnittdarstellungen eine weitere beispielhafte Ausführungsform der erfindungsgemässen Kettenumlenkung, wobei die Schnittfläche in Figur 5 in der Krümmungsebene der Umlenkung liegt (senkrecht zur Kettenradachse), in der Figur 6 senkrecht dazu (parallel zur Kettenradachse) und durch den Mittelpunkt des Umlenkungskreises gelegt ist. Es handelt sich dabei um die Umlenkung einer Transportkette 10 um ein Kettenrad 20, wobei die Kette 10 auf ihrer ganzen Bahn, also auch entlang dem Umlenkungsbogen B, in einem Kettenkanal 30 läuft. Dieser Kanalverlauf hat den Vorteil, dass die Kette in beiden Laufrichtungen auf Zug und auf Druck belastet bewegt werden kann.

Die Kette 10 ist eine für den Transport von Druckprodukten bekannte Kette. Sie besteht aus Kettengliedern 11 (schematisch als Linien dargestellt) und Kettengelenken, die aus einer Gelenkachse und daran laufenden Rollen 13 besteht. An den Gelenkachsen sind ferner beispielsweise Klammern 14 befestigt, mit denen Druckprodukte festgehalten und transportiert werden. Die Gelenkachsen 12 weisen beispielsweise zwischen Rolle 13 und Klammer 14 mindestens eine freie Stelle auf die mit dem Kettenrad 20 zum Eingriff gebracht wird. Das dargestellt Kettenrad weist effektiv fünfzehn Zähne 21 auf, deren Abstand auf dem Kettenradumfang aber derart ist, dass nur jeder zweite Zahn in die Kette eingreifen kann. Es handelt sich also hier um ein Kettenrad mit z = 7,5, das bereits im Zusammenhang mit der Figur 2 erwähnt wurde. Der Führungskanal 30 besteht aus Laufschienen 31.1 (innere Laufschiene) und 31.2 (äussere Laufschiene), auf denen die Rollen 13 je nach den auf die Kette wirkenden Kräften abrollen, und kann auch seitliche Abdeckungen 32 aufweisen. Die äussere Laufschiene 31.2 weist eine spaltförmige Lücke auf, die sich über die ganze Länge des Kanals 30 erstreckt und durch die die ausserhalb des Kanals angeordneten Klammern 14 mit den Gelenkachsen 12 in Verbindung sind. Die innere Laufschiene 31.1 weist wenigstens im Bereiche das Kettenrades 20 ebenfalls eine spaltförmige Lücke auf, durch die das Kettenrad 20 mit der Kette 10 zum Eingriff kommt.

Die Kettenbahn der in den Figuren 5 und 6 dargestellten Ausführungsform besteht aus geradlinigen Kettenbahnteilen G.11 und G.12, Übergangskurven UK.11 und UK.12 sowie einem Umlenkungsbogen B.11. Die Übergangskurven stellen Klothoiden dar, deren Krümmungsradius an den Anschlusspunkten C.11 bzw. C.12, wo sie an die geradlinigen Bahnteile G.11 bzw. G.12 anschliessen, unendlich gross ist, an den Anschlusspunkten A.11 bzw. A.12, wo sie an den Umlenkungsbogen B.11 anschliessen, dem Teilkreisradius des Kettenrades 20 entspricht. An den Anschlusspunkten A.11 und A.12 haben die Übergangskurven und der Umlenkungsbogen eine gemeinsame Tangente (T.11 bzw. T.12). Der Öffnungswinkel α.11 des Umlenkungsbogens beträgt gemäss Figur 96°, das heisst, dass immer zwei Zähne des Kettenrades 20 mit der Kette 10 im Eingriff sind. Der Öffnungswinkel des Umlenkungsbogens muss für den dargestellten Fall (z = 7,5) minimal 48° betragen, damit immer mindestens ein Zahn mit der Kette im Eingriff ist. Ein möglichst kleiner Öffnungswinkel ist deshalb vorteilhaft, weil dadurch die Übergangskurven verlängert werden und der Gradient des Krümmungsradius kleiner wird, was die Polygonalwirkung, wie eingangs erwähnt, verkleinert.

Die obige Beschreibung beshränkt sich auf Kettenumlenkungen, die in einer Ebene liegen. Die Übergangskurven können aber ohne weiteres dreidimensionale Formen aufweisen. Das Gesagte gilt in diesen Fällen für die Projektion der Übergangskurve in die Ebene des Umlenkungsbogens.

**Patentansprüche**

1. Kettenumlenkung, die eine Kette (10) aus gelenkig aneinander gereihten Kettenliedern, ein Umlenkungsmittel (20) und Kettenführungsmittel (30) aufweist, wobei durch das Umlenkungsmittel die Bahn, auf der sich die Kette bewegt, über einen kreisbogenförmigen Umlenkungsbogen (B) mit dem Umlenkungsradius (R) umgelenkt wird und, die Kettenführungsmittel (30) derart ausgestaltet sind, dass die Kettenbahn mindestens eine Übergangskurve (UK) aufweist, die an einer ersten Anschlussstelle (A) an den Umlenkungsbogen (B) anschliesst, wobei Umlenkungsbogen (B) und Übergangskurve (UK) an der ersten Anschlussstelle (A) eine gemeinsame Tangente haben, dadurch gekennzeichnet, dass die Krümmung der Übergangskurve (UK) sich entlang ihrer Länge derart verändert, dass der Unterschied zwischen ihrem Krümmungsradius (RUK) und dem Umlenkungsradius (R) mit abnehmendem Abstand zur ersten Anschlussstelle (A) stetig abnimmt.

2. Kettenumlenkung nach Anspruch 1, **dadurch gekennzeichnet**, dass der Umlenkungsbogen (B) und die Übergangskurve (UK) in derselben Ebene liegen.

3. Kettenumlenkung nach einem der Ansprüche 1 oder 2, **dadurch gekennzeichnet**, dass die Krümmungsrichtungen des Umlenkungsbogens (B) und der Übergangskurve (UK.1/2) gleich sind.

4. Kettenumlenkung nach einem der Ansprüche 1 oder 2, **dadurch gekennzeichnet**, dass die Krümmungsrichtungen des Umlenkungsbogens (B.3) und der Übergangskurve (UK.4) einander entgegengesetzt sind und die Anschlusstelle (A.4/A'.4) ein geradliniges Kettenbahnstück darstellt, das mindestens so lang ist wie ein Kettenglied.

5. Kettenumlenkung nach einem der Ansprüche 1 bis 4, **dadurch gekennzeichnet**, dass der Krümmungsradius der Übergangskurve (UK.11/12) an der ersten Übergangsstelle (A.11/12) dem Umlenkungsradius des Umlenkungsbogens (B.11) entspricht.

6. Kettenumlenkung nach einem der Ansprüche 1 bis 5, **dadurch gekennzeichnet**, dass an die Übergangskurve (UK) an einer zweiten Anschlusstelle (C) ein gradliniger Kettenbahnteil (G) anschliesst und dass der Krümmungsradius der Übergangskurve von der ersten Anschlusstelle (A) zur zweiten Anschlusstelle (C) stetig zunimmt.

7. Kettenumlenkung nach Anspruch 6, **dadurch gekennzeichnet**, dass der Krümmungsradius der Übergangskurve an der zweiten Anschlusstelle (C.11/12) unendlich gross ist.

8. Kettenumlenkung nach Anspruch 1 bis 5, **dadurch gekennzeichnet**, dass an die Übergangskurve (UK.5/6) in einer weiteren Anschlusstelle (E.5/6) ein weiterer Umlenkungsbogen (B.6) anschliesst, dessen Umlenkungsradius (R.6) grösser ist als der Umlenkungsradius (R.5) des an der ersten Anschlusstelle (A.5/6) anschliessenden Umlenkungsbogens (B.5) und dass der Krümmungsradius in der weiteren Anschlussstelle (E.5/6) grösser ist als der Umlenkungsradius (R.6) des weiteren Umlenkungsbogens (B.6).

9. Kettenumlenkung nach einem der Ansprüche 1 bis 8, **dadurch gekennzeichnet**, dass die Übergangskurve einen Teil einer Klothoide darstellt.

10. Kettenumlenkung nach einem der Ansprüche 1 bis 9, **dadurch gekennzeichnet**, dass die Kettenführungsmittel Führungskanäle oder Führungsschienen sind.

11. Kettenumlenkung nach einem der Ansprüche 1 bis 10, **dadurch gekennzeichnet**, dass das Umlenkungsmittel ein Kettenrad oder ein kreisbogenförmig gekrümmter Teil eines Führungskanales ist.

**Claims**

1. Chain reversing means, which has a chain (10) of articulated, lined up chain links, a reversing member (20) and chain guide means (30), the reversing member reversing the path on which the chain is moving over an arcuate reversing arc (B) with the reversing radius (R) and the chain guidance means (30) are so constructed that the chain path has at least one transition curve (UK), which is connected at a first connection point (A) to the reversing arc (B), the reversing arc (B) and the transition curve (UK) having at the first connection point (A) a common tangent, characterized in that the curvature of the transition curve (UK) changes along its length in such a way that the difference between its radius of curvature (RUK) and the reversing radius (R) constantly decreases with decreasing distance from the first connection point (A).

2. Chain reversing means according to claim 1, characterized in that the reversing arc (B) and the transition curve (UK) are in the same plane.

3. Chain reversing means according to one of the claims 1 or 2, characterized in that the curvature directions of the reversing arc (B) and the transition curve (UK.1/2) are the same.

4. Chain reversing means according to one of the claims 1 or 2, characterized in that the curvature directions of the reversing arc (B.3) and the transition curve (UK.4) are directed in opposition to one another and the connection point (A.4/A.'4) represents a linear chain path part, which is at least as long as a chain link.

5. Chain reversing means according to one of the claims 1 to 4, characterized in that the radius of curvature of the transition curve (UK.11/12) at the first transition point (A.11/12) corresponds to the reversing radius of the reversing arc (B.11).

6. Chain reversing means according to one of the claims 1 to 5, characterized in that to the transition curve (UK) at a second connection point (C) is connected a linear chain path part (G) and that the radius of curvature of the transition curve continuously increases from the first connection point (A) to the second connection point (C).

7. Chain reversing means according to claim 6, characterized in that the radius of curvature of the transition curve at the second connection point (C.11/12) is infinitely large.

8. Chain reversing means according to claim 1 to 5, characterized in that to the transition curve (UK.5/6) in a further connection point (E.5/6) is connected a further reversing arc (B.6), whose reversing radius (R.6) is larger than the reversing radius (R.5) of the reversing arc (B.5) connected to the first connection point (A.5/6) and that the radius of curvature in the further connection point (E.5/6) is larger than the reversing radius (R.6) of the further reversing arc (B.6).

9. Chain reversing means according to one of the claims 1 to 8, characterized in that the transition curve is part of a clothoid.

10. Chain reversing means according to one of the claims 1 to 9, characterized in that the chain guidance means are guidance channels or guide rails.

11. Chain reversing means according to one of the claims 1 to 10, characterized in that the reversing means is a sprocket wheel or an arcuately curved part of a guide channel.

**Revendications**

1. Renvoi de chaîne comportant une chaîne (10) faite de maillons alignés de façon articulée entre eux, un moyen de renvoi (20) et des moyens de guidage de la chaîne (30), le moyen de renvoi déviant la trajectoire sur laquelle se déplace la chaîne sur un arc de renvoi (B) en arc de cercle ayant le rayon de déviation (R), et les moyens de guidage de la chaîne (30) sont conçus de telle sorte que la trajectoire de la chaîne présente au moins une courbe de transition (UK), qui se raccorde en un premier point de liaison (A) à l'arc de déviation (B), l'arc de déviation (B) et la courbe de transition (UK) ayant une tangente commune au premier point de liaison (A), caractérisé en ce que la courbure de la courbe de transition (UK) se modifie sur sa longueur de telle sorte que la différence entre le rayon de courbure (RUK) et le rayon de déviation (R) diminue de façon constante lorsque diminue la distance jusqu'au premier point de liaison (A).

2. Renvoi de chaîne selon la revendication 1, caractérisé en ce que l'arc de déviation (B) et la courbe de transition (UK) se trouvent dans le même plan.

3. Renvoi de chaîne selon l'une quelconque des revendications 1 et 2, caractérisé en ce que les sens de courbure de l'arc de déviation (B) et de la courbe de transition (UK.1/2) sont identiques.

4. Renvoi de chaîne selon l'une quelconque des revendications 1 et 2, caractérisé en ce que les sens de courbure de l'arc de déviation (B.3) et de la courbe de transition (UK.4) sont opposés l'un à l'autre et le point de liaison (A.4/A'.4) représente une partie de trajectoire de chaîne rectiligne, qui est au moins aussi longue qu'un maillon de la chaîne.

5. Renvoi de chaîne selon l'un ou l'ensemble des revendications 1 à 4, caractérisé en ce que le rayon de courbure de la courbe de transition (UK.11/12) au premier point de transition (A.11/12) correspond au rayon de déviation de l'arc de déviation (B.11).

6. Renvoi de chaîne selon l'une ou l'ensemble des revendications 1 à 5, caractérisé en ce qu'une partie de trajectoire de chaîne rectiligne (G) fait suite à la courbe de transition (UK) en un deuxième point de liaison (C) et en ce que le rayon de courbure de la courbe de transition augmente de façon constante entre le premier point de liaison (A) et le deuxième (C).

7. Renvoi de chaîne selon la revendication 6, caractérisé en ce que le rayon de courbure de la courbe de transition au deuxième point de liaison (C.11/12) a une grandeur infinie.

8. Renvoi de chaîne selon l'une ou l'ensemble des revendications 1 à 5, caractérisé en ce que la courbe de transition (UK.5/6) est suivie en un autre point de liaison (E.5/6) par un autre arc de déviation (B.6), dont le rayon de déviation (R.6) est plus grand que le rayon de déviation (R.5) de l'arc de courbure (B.5) qui fait suite au premier point de liaison (A.5/6) et en ce que le rayon de courbure à l'autre point de liaison (E.5/6) est plus grand que le rayon de courbure (R.6) de l'autre arc de déviation (B.6).

9. Renvoi de chaîne selon l'une ou l'ensemble des revendications 1 à 8, caractérisé en ce que la courbe de transition forme une partie de clothoïde.

10. Renvoi de chaîne selon l'une ou l'ensemble des revendications 1 à 9, caractérisé en ce que les moyens de guidage de la chaîne sont des canaux de guidage ou des rails de guidage.

11. Renvoi de chaîne selon l'une ou l'ensemble des revendications 1 à 10, caractérisé en ce que le moyen de déviation est une roue à chaîne ou une partie de canal de guidage courbée en arc de cercle.

FIG. 1

FIG. 2

| Z | Δ % |
|---|------|
| 7,5 | ~? 2,6 |
| 17 | ~1 |
| 13 | ~1,7 |
| 12 | ~2 |
| 11 | ~2,7 |
| 9 | ~3,6 |
| 7,5 | ~5 |
| 19 | 1,36 |
| 17 | 1,70 |
| 13 | 2,90 |
| 12 | 3,41 |
| 11 | 4,05 |
| 9 | 6,03 |
| 7,5 | 8,65 |

FIG. 3

FIG. 4

FIG. 5

FIG. 6